(19)

Europäisches
Patentamt

European
Patent Office

Office européen
des brevets

(11)  **EP 4 318 323 A1**

(12)  **EUROPEAN PATENT APPLICATION**

(43) Date of publication:
**07.02.2024   Bulletin 2024/06**

(21) Application number: **22191725.5**

(22) Date of filing: **23.08.2022**

(51) International Patent Classification (IPC):
**G06N 3/082** (2023.01)      **G06N 3/045** (2023.01)
**G06N 3/096** (2023.01)

(52) Cooperative Patent Classification (CPC):
**G06N 3/045; G06N 3/082;** G06N 3/096

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **01.08.2022   NL 2032650**

(71) Applicant: **NavInfo Europe B.V.
5657 DB Eindhoven (NL)**

(72) Inventors:
  • **GURULINGAN, Naresh Kumar
    5657 DB Eindhoven (NL)**

  • **ARANI, Elahe
    5657 DB Eindhoven (NL)**
  • **ZONOOZ, Bahram
    5657 DB Eindhoven (NL)**

(74) Representative: **van Breda, Jacobus
    Octrooibureau Los & Stigter B.V.
    P.O. Box 20052
    1000 HB Amsterdam (NL)**

Remarks:
Amended claims in accordance with Rule 137(2)
EPC.

(54)   **METHOD AND SYSTEM FOR MULTI-TASK STRUCTURAL LEARNING**

(57)    A computer-implemented method for multi-task structural learning in artificial neural network wherein both the architecture and its parameters are learned simultaneously. The said method utilizes two neural operators namely neuron creation and neuron removal to aid in structural learning. The method creates excess neurons by starting from a disparate network for each task. Through the progress of training, corresponding task neurons in a layer pave the way for a specialized group neuron leading to a structural change. In the task learning phase of training, different neurons specialize in different tasks. In the interleaved structural learning phase, locally similar task neurons, before being removed, transfer their knowledge to a newly created group neuron. The training is completed with a final fine-tuning phase where only the multi-task loss is used.

Fig. 1

**EP 4 318 323 A1**

## Description

The invention relates to a computer-implemented method and a system for multi-task structural learning in an artificial neural network wherein the architecture and its parameters are learned simultaneously.

General description

Artificial Neural Networks (ANNs) have exhibited strong performance in various tasks essential for scene understanding. Single-Task Learning (STL) [2, 3, 4] has largely been at the center of this exhibit driven by custom task-specific improvements. Despite these improvements, using single task networks for the multiple tasks required for scene understanding comes with notable problems such as a linear increase in computational cost and a lack of inter-task communication.

Multi-Task Learning (MTL), on the other hand, with the aid of shared layers provides favorable benefits over STL such as improved inference efficiency and positive information transfer between tasks. However, a notable drawback of sharing layers is task interference. Existing works have attempted to alleviate task interference using architecture modifications [5, 6], by determining which tasks to group together using a notion of similarity [7, 8, 9], by balancing task loss functions [10, 11, 12, 13], or by learning the architecture [14, 15]. Although these methods have shown promise, progress can be made by drawing inspiration from the brain which is the only known intelligent system that excels in multi-task learning.

Task interference in MTL:

Although different lines of work such as architecture modifications [5, 6], task grouping [7, 8, 9], or task loss balancing [10, 11, 12, 13] address task interference, structural learning has not been widely studied. Learning in the brain, in addition to changes in synaptic strength, also involves structural changes. Instead of using static architectures, Guo et al. [14] and Lu et al. [15] propose methods to learn the multi-task architecture. Guo et al. [14] start from a dense search space where a child layer is connected to a plurality of parent layers. During learning, a distribution over parent nodes is learned with the aid of path sampling. At the end of training, a valid network path is picked and using neuron removal, the neurons no longer a part of the valid path are removed. However, the method of Guo et al. [14] does not involve progressive neuron removals at different intervals during training. Lu et al. [15] use neuron creation where tasks are split into different branches starting from the output layer to the input layer using inter-task affinities defined based on task error margins. Contrary to Lu et al. [15], moving from a dense set of neurons to a sparse architecture is likely more similar to structural learning in the brain.

It is an object of the current invention to correct the shortcomings of the prior art and to provide a solution for efficient multi-task structural learning in artificial neural networks. This and other objects which will become apparent from the following disclosure, are provided with a computer-implemented method for learning of a plurality of tasks in artificial neural networks, a computer-readable storage, and an autonomous vehicle, having the features of one or more of the appended claims.

In a first aspect of the invention, the computer-implemented method for learning of a plurality of tasks in artificial neural networks comprises the steps of:

- initially processing each task in a single network comprising a plurality of layers wherein:
- the first layer comprises a task node;
- the last layer comprises a task prediction head;
- the remaining consecutive layers specific to a task comprise a task branch; and
- initially connecting all task nodes to an input image, wherein the method comprises a structural learning phase comprising the steps of creating and removing neurons based on local task similarity.

Additionally, the method comprises a task learning phase comprising the steps of:

- training all networks to minimize a multi-task loss; and
- training all the task nodes to maximize similarity among the said task nodes by aligning their learned concepts.

Advantageously, the step of maximizing similarity among task nodes by aligning learned concepts of said task nodes comprises the step of locally increasing a similarity in said learned concepts by gauging a similarity between features of said task nodes, representing the local activity of a task, using a similarity metric such as Centered Kernel Alignment.

In fact, the method of the invention utilizes two neural operators namely neuron creation and neuron removal to aid in structural learning. In early development, the brain has excess neurons that can provide a rich information pipeline enabling neural circuits to undergo pruning and to functionally specialize. Likewise, the method of the invention creates excess neurons by starting from a disparate network for each task. Through the progress of training, corresponding task neurons in a layer pave the way for a specialized group neuron leading to a structural change.

Suitably, the task learning phase comprises the steps of:

- using a weighted sum of all individual task losses for representing the multi-task loss; and
- using a regularization term included with a balancing factor and a negative sign for maximizing alignment between task nodes.

More suitably, the step of training the entire network to minimize a multi-task loss comprises the step of minimizing the task branch, including the task node, only on the corresponding task loss independently of other tasks.

Furthermore, the step of creating neurons based on local task similarity comprises the steps of:

- calculating similarity between all pairs of task node features;
- listing all possible groups of task nodes;
- selecting a set of groups that maximizes the total similarity;
- using the groups that satisfy a minimum required similarity for creating a group node;

Additionally, the step of creating neurons based on local task similarity comprises the step of using knowledge learned in the task nodes for initializing the created group node using a two-step process, comprising:

- obtaining weights of the group node by averaging parameters of the concerned task nodes;
- distilling the knowledge learned by multiple task nodes into the group node using an attention-based feature amalgamation method.

The step of removing neurons based on local task similarity comprises the steps of:

- labeling the task nodes used for creating the group node as redundant nodes;
- disconnecting the task branches connected to said redundant task nodes and removing said redundant task nodes;

- connecting the disconnected task branches to the corresponding group node; and
- assigning the first layer of said task branches as new task nodes;

Advantageously, the method comprises a fine-tuning phase wherein the network is only trained with the multi-task loss while skipping the step of aligning concepts learned by task nodes.

More advantageously, the method comprises the step of alternating between the task learning phase and the structural learning phase for a plurality of times before starting the final fine-tuning phase.

In a second embodiment of the invention, the computer-readable storage is provided with a computer program wherein when said computer program is loaded and executed by a computer, said computer program causes the computer to carry out the steps of the computer-implemented method according to any one of the aforementioned steps.

In a third embodiment of the invention, an autonomous vehicle comprises a computer loaded with a computer program wherein said program is arranged for causing the computer to carry out the steps of the computer-implemented method according to any one of the aforementioned steps.

The invention will hereinafter be further elucidated with reference to the drawing of an exemplary embodiment of a computer-implemented method according to the invention that is not limiting as to the appended claims.

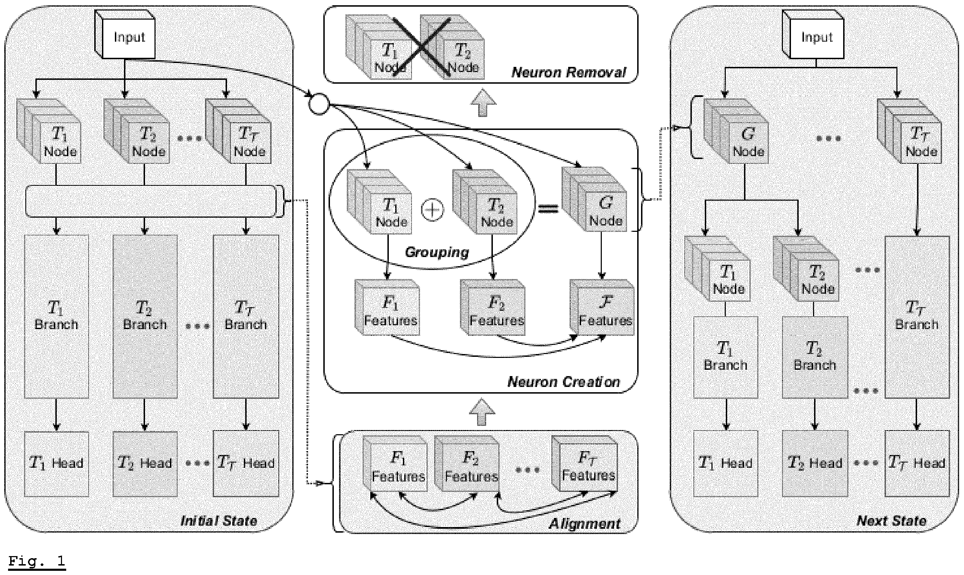

In the drawing, figure 1 shows a schematic diagram for the computer-implemented method according to the invention.

Whenever in the figures the same reference numerals are applied, these numerals refer to the same parts.

Detailed description

The method of the current invention utilizes two neural operators namely neuron creation and neuron removal to aid in structural learning. In early development, the brain has excess neurons that can provide a rich information pipeline enabling neural circuits to undergo pruning and to functionally specialize. Likewise, the method of the invention creates excess neurons by starting from a disparate network for each task. Through the progress of training, corresponding task neurons in a layer pave the way for a specialized group neuron leading to a structural change.

Enabling neuron creation and neuron removal:

The method of the invention relies on local task similarity to drive group neuron creation and the removal of the corresponding task neurons. The learned convolutional filters in different task branches might not align one-on-one due to the permutation invariance of convolutional neural networks [16]. Existing works [17, 18, 19, 20] use different ways to align corresponding layers of two models to counteract the permutation invariance. MTSL uses Centered Kernel Alignment (CKA) [21] to align neurons based on representation similarity. Knowledge amalgamation approaches [17, 22, 23, 24, 25] address distilling the knowledge from multiple learned teachers into a single student. Ye et al. [26] create task-specific coding at a layer in the student network using a small network for feature distillation. MTSL uses this feature distillation process to exploit the knowledge of the task neurons set to be removed.

Problem Setup:

In structural learning the multi-task learning architecture and its parameters are learned simultaneously. Given the set of T tasks that each has its own single network with L layers, the computer-implemented method according to the current invention results in a single multi-task network capable of inferring all the T tasks accurately without any need for retraining.

Definition of terminologies: a node is a layer that connects one branch to another branch (or to a node) and a branch is a sequence of layers that follow a node.

Initially, the first layer of each single task network is the task node while the rest of the task network, excluding the task head, is called the task branch. Similarly, a group of tasks will have a group node and a group branch. A task node is of particular significance to the method of the current invention as tasks can only be fused at the task node. Also, only the task nodes which are connected to the same group branch or to the same group node can be fused. At the start of the training, all task nodes are connected to the input image and can be fused. The schematic in figure 1 illustrates the method of the invention where the leftmost column depicts the initial state of the setup making use of the terminologies defined so far.

Aligning Task Specific Representations:

As is evident from the schematic of figure 1, the training starts from single task networks. To obtain a single task network, the UniNet [27] architecture is used with just one dense prediction head. Since the encoder of each task is initialized with ImageNet weights, there exists a correspondence between task nodes initially. During training, the task nodes would learn concepts that minimize the current task loss independently of other tasks. This independence breaks any correspondence between parameters mapped one-to-one between any two task nodes. This behavior comes from the permutation invariance of neural networks leading to no guarantee concerning the order in which concepts are learned [16]. Therefore, the method of the invention aligns the concepts learned by task nodes and locally increases their similarity using Centered Kernel Alignment (CKA) [21].

CKA is used to measure the similarity between two feature representations and has been shown to provide meaningful similarity scores. During training, a CKA-based regularization term is introduced between task nodes branching from the same group node/branch (or the input). This regularization term, as shown in the alignment part of the schematic in figure 1, is included between all pairs of task node features (indicated using bi-directional arrows) and enforces the task representations to align by serving as an alignment constraint. The method according to the invention comprises the step of using the unbiased CKA estimator [28] to facilitate reliable estimates of CKA with small batch sizes used during training.

The overall loss that is used for training in the task learning phase of the computer-implemented method according to the current invention comprises two terms. The first term represents the multi-task loss which is a weighted sum of all individual task losses. The second term is the CKA regularization term which is included with a balancing factor lambda and with a negative sign to maximize alignment between tasks.

Creating Group Nodes:

The overall loss used during the task learning phase leads tasks to learn similar features while also minimizing the concerned task loss. Next, the method of the invention starts the structural learning phase to first leverage neuron creation. In the brain, local neuronal activity can affect the structure of the neural circuitry [29] and play a role in learning experiences [30]. Taking cues from these notions of locality, the computer-implemented method of the invention comprises the step of using CKA to gauge a similarity between task node features that represent the local activity of task neurons. These local task similarities are used to induce the creation of group nodes.

First, CKA between all pairs of task node features is calculated after which all possible groups of task nodes are listed. From these groups, a set of groups that maximizes the total similarity is picked and the groups that satisfy a minimum similarity induce the creation of a group neuron. For instance, in the schematic, we see that the picked groups are [T1, T2] and T3 assuming that the total number of tasks is three.

After grouping the task nodes, a group node is created for each group. The learned knowledge in the task neurons is used to initialize the created group node using a two-step process:

- First, the weights of the group node are obtained by averaging the parameters of the concerned task nodes. This averaging is justified by the alignment constraint used in the task learning phase that ensures that corresponding parameters learn similar concepts. The schematic of figure 1 depicts the averaging initialization using a plus symbol.
- Second, the information learned by multiple task nodes is distilled into the group node using an attention-based feature amalgamation method [26] referred to as ATT as follows:

$$\mathcal{L}_{KA} = \frac{1}{N} \sum_{i}^{N} \left( F_i - ATT_i^{net}(\mathcal{F}) * \mathcal{F} \right)^2$$

The knowledge amalgamation objective $L_{KA}$ is provided in the above equation assuming that there are N tasks grouped together. $ATT^{net}$ denotes the attention network consisting of two linear layers with an intermediate ReLU activation and a final sigmoid activation.

Removing Task Neurons:

Starting from a dense set of neurons the computer-implemented method of the invention provides the opportunity to leverage a rich information flow originating from diverse task information. Using neuron removal, the method of the invention moves towards a sparser architecture by removing task nodes that learn similar representations. These locally similar task nodes become redundant once they transfer their knowledge to the group node. The task branch is then disconnected from these redundant task nodes and connected to the group node. As defined in the problem setup, the neurons from the task branch that now connect to the group node become the task nodes. These changes are evident in the depicted next state in the schematic of figure 1.

Algorithm:

The following pseudo code presents the different phases involved in the computer-implemented method of the current invention, namely a task learning phase, a structural learning phase, and a fine-tuning phase. The task learning phase and the structural learning phase occur alternatively for n number of times followed by the final fine-tuning phase.

---

**Algorithm 1:** MTSL algorithm

---

**Input:** Initial state, Training budget $E$, Minimum fine-tuning budget $f$;

$n \leftarrow$ Number of structural learning phases;

Task Learning Epochs $E_t \leftarrow [t^1, t^2 .., t^n]$, $\sum_i^n E_t^i < E - f$;

Structural Learning Epochs $E_s \leftarrow [s^1, s^2 .., s^n]$;

**while** $e < E - f$ **do**

    $t \leftarrow$ Next value from $E_t$;                      `// Task Learning Phase`

    **for** $t$ epochs **do**

        Train using loss $\mathcal{L} = \mathcal{L}_{MTL} - \lambda \mathcal{L}_{CKA}$;

    **end**

    $e \leftarrow e + t$;

    Create group nodes using local task similarity;      `// Structural Learning Phase`

    Average corresponding task nodes to initialize group nodes;

    $s \leftarrow$ Next value from $E_s$;

    **for** $s$ epochs **do**

        Use ATT to transfer knowledge in corresponding task nodes to group nodes;

    **end**

    **if** there is no more layer in all task branches **then**

        Exit loop;

    **end**

**end**

**for** $E - e$ epochs **do**                           `// Fine-Tuning Phase`

    Fine-tune using multi-task loss $\mathcal{L}_{MTL}$;

**end**

---

In the task learning phase, the entire network is trained to minimize the multi-task loss and to maximize similarity among task nodes. The structural learning phase involves neuron creation and neuron removal. E_t determines the number of epochs for which each subsequent task learning phase is executed. Similarly, E_s determines the epochs for ATT-based knowledge transfer. Considering a total training budget of E epochs, the task learning phase is executed up to E - f epochs where f is the minimum epochs allocated for the fine-tuning phase during which the task nodes are no longer forced to align. In the fine-tuning phase, the network is only trained with the multi-task loss.

Embodiments of the present invention can include every combination of features that are disclosed herein independently from each other.

Typical application areas of the invention include, but are not limited to:

- Road condition monitoring
- Road signs detection
- Parking occupancy detection
- Defect inspection in manufacturing
- Insect detection in agriculture
- Aerial survey and imaging

Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the append-ed claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers/distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

References:

1. Anonymous. Structural Learning in Artificial Neural Networks: A Neural Operator Perspective. Under review in Transactions of Machine Learning Research, 2022.

2. Marin Orsic, Ivan Kreso, Petra Bevandic, and Sinisa Segvic. In defense of pre-trained imagenet architectures for real-time semantic segmentation of road-driving images. In Proceedings of the IEEE/CVF Conference on Computer Vision and Pattern Recognition, pages 12607-12616, 2019.

3. Lijun Wang, Jianming Zhang, Oliver Wang, Zhe Lin, and Huchuan Lu. Sdc-depth: Semantic divide-and-conquer network for monocular depth estimation. In Proceedings of the IEEE/CVF Conference on Computer Vision and Pattern Recognition, pages 541-550, 2020.

4. Changqian Yu, Changxin Gao, Jingbo Wang, Gang Yu, Chunhua Shen, and Nong Sang. Bisenet v2: Bilateral network with guided aggregation for real-time semantic segmentation. International Journal of Computer Vision, 129(11):3051-3068, 2021.

5. Menelaos Kanakis, David Bruggemann, Suman Saha, Stamatios Georgoulis, Anton Obukhov, and Luc Van Gool. Reparameterizing convolutions for incremental multi-task learning without task interference. In Andrea Vedaldi, Horst Bischof, Thomas Brox, and Jan-Michael Frahm, editors, Computer Vision - ECCV 2020, pages 689-707, Cham, 2020. Springer International Publishing.

6. Shikun Liu, Edward Johns, and Andrew J. Davison. End-to-end multi-task learning with attention. 2019 IEEE/CVF Conference on Computer Vision and Pattern Recognition (CVPR), pages 1871-1880, 2019.

7. Trevor Scott Standley, Amir Roshan Zamir, Dawn Chen, Leonidas J. Guibas, Jitendra Malik, and Silvio Savarese. Which tasks should be learned together in multi-task learning? In ICML, 2020.

8. Christopher Fifty, Ehsan Amid, Zhe Zhao, Tianhe Yu, Rohan Anil, and Chelsea Finn. Efficiently identifying task groupings for multi-task learning. In A. Beygelzimer, Y. Dauphin, P. Liang, and J. Wortman Vaughan (eds.), Advances in Neural Information Processing Systems, 2021.

9. S. Vandenhende, S. Georgoulis, B. De Brabandere, and L. Van Gool. Branched Multi-Task Networks: Deciding What Layers To Share. In BMVC, 2020.

10. Alex Kendall, Yarin Gal, and Roberto Cipolla. Multi-task learning using uncertainty to weigh losses for scene geometry and semantics. 2018 IEEE/CVF Conference on Computer Vision and Pattern Recognition, pages 7482-7491, 2018.

11. Xi Lin, Hui-Ling Zhen, Zhenhua Li, Qing-Fu Zhang, and Sam Kwong. Pareto multi-task learning. In H. Wallach, H. Larochelle, A. Beygelzimer, F. d'Alché-Buc, E. Fox, and R. Garnett, editors, Advances in Neural Information Processing Systems, volume 32. Curran Associates, Inc., 2019.

12. Shikun Liu, Edward Johns, and Andrew J. Davison. End-to-end multi-task learning with attention. 2019 IEEE/CVF Conference on Computer Vision and Pattern Recognition (CVPR), pages 1871-1880, 2019.

13. Tianhe Yu, Saurabh Kumar, Abhishek Gupta, Sergey Levine, Karol Hausman, and Chelsea Finn. Gradient surgery for multi-task learning. In H. Larochelle, M. Ranzato, R. Hadsell, M.F. Balcan, and H. Lin, editors, Advances in Neural Information Processing Systems, volume 33, pages 5824-5836. Curran Associates, Inc., 2020.

14. Pengsheng Guo, Chen-Yu Lee, and Daniel Ulbricht. Learning to branch for multi-task learning. In Hal Daumé III and Aarti Singh, editors, Proceedings of the 37th International Conference on Machine Learning, volume 119 of Proceedings of Machine Learning Research, pages 3854-3863. PMLR, 13-18 Jul 2020.

15. Yongxi Lu, Abhishek Kumar, Shuangfei Zhai, Yu Cheng, Tara Javidi, and Rogerio Feris. Fully-adaptive feature sharing in multi-task networks with applications in person attribute classification. In 2017 IEEE Conference on Computer Vision and Pattern Recognition (CVPR), pages 1131-1140, 2017.

16. Hongyi Wang, Mikhail Yurochkin, Yuekai Sun, Dimitris Papailiopoulos, and Yasaman Khazaeni. Federated learning with matched averaging. In International Conference on Learning Representations, 2020.

17. Xiaoxi He, Zimu Zhou, and Lothar Thiele. Multi-task zipping via layer-wise neuron sharing. In NeurIPS, 2018.

18. Mikhail Iu. Leontev, Viktoriia Islenteva, and Sergey V. Sukhov. Non-iterative knowledge fusion in deep convolutional neural networks. Neural Processing Letters, 51:1-22, 2019.

19. Sidak Pal Singh and Martin Jaggi. Model fusion via optimal transport. In H. Larochelle, M. Ranzato, R. Hadsell, M. F. Balcan, and H. Lin, editors, Advances in Neural Information Processing Systems, volume 33, pages 22045-22055. Curran Associates, Inc., 2020.

20. Hongyi Wang, Mikhail Yurochkin, Yuekai Sun, Dimitris Papailiopoulos, and Yasaman Khazaeni. Federated learning with matched averaging. In International Conference on Learning Representations, 2020.

21. Simon Kornblith, Mohammad Norouzi, Honglak Lee, and Geoffrey Hinton. Similarity of neural network representations revisited. In Kamalika Chaudhuri and Ruslan Salakhutdinov, editors, Proceedings of the 36th International Conference on Machine Learning, volume 97 of Proceedings of Machine Learning Research, pages 3519-3529. PMLR, 09-15 Jun 2019.

22. Wei-Hong Li and Hakan Bilen. Knowledge distillation for multi-task learning. In Proceedings of the European Conference on Computer Vision Workshop on Imbalance Problems in Computer Vision, 2020.

23. Sihui Luo, Wenwen Pan, Xinchao Wang, Dazhou Wang, Haihong Tang, and Mingli Song. Collaboration by competition: Self-coordinated knowledge amalgamation for multi-talent student learning. In ECCV, 2020.

24. Sihui Luo, Xinchao Wang, Gongfan Fang, Yao Hu, Dapeng Tao, and Mingli Song. Knowledge amalgamation from heterogeneous networks by common feature learning. In Proceedings of the 28th International Joint Conference on Artificial Intelligence (IJCAI), 2019.

25. Chengchao Shen, Xinchao Wang, Jie Song, Li Sun, and Mingli Song. Amalgamating knowledge towards comprehensive classification. In Proceedings of the Thirty-Third AAAI Conference on Artificial Intelligence and Thirty-First Innovative Applications of Artificial Intelligence Conference and Ninth AAAI Symposium on Educational Advances in Artificial Intelligence, AAAI'19/IAAI'19/EAAI'19. AAAI Press, 2019.

26. Jingwen Ye, Yixin Ji, Xinchao Wang, Kairi Ou, Dapeng Tao, and Mingli Song. Student becoming the master: Knowledge amalgamation for joint scene parsing, depth estimation, and more. 2019 IEEE/CVF Conference on Computer Vision and Pattern Recognition (CVPR), pages 2824-2833, 2019.

27. Naresh Kumar Gurulingan, Elahe Arani, and Bahram Zonooz. UniNet: A unified scene understanding network and exploring multi-task relationships through the lens of adversarial attacks. In Proceedings of the IEEE/CVF International Conference on Computer Vision (ICCV) Workshops, pp. 2239-2248, October 2021.

28. Thao Nguyen, Maithra Raghu, and Simon Kornblith. Do wide and deep networks learn the same things? uncovering how neural network representations vary with width and depth. In International Conference on Learning Representations, 2021.

29. Heiko J Luhmann, Anne Sinning, Jenq-Wei Yang, Vicente Reyes-Puerta, Maik C Stüttgen, Sergei Kirischuk, and Werner Kilb. Spontaneous neuronal activity in developing neocortical networks: from single cells to large-scale interactions. Frontiers in neural circuits, 10:40, 2016.

30. Dhireesha Kudithipudi, Mario Aguilar-Simon, Jonathan Babb, Maxim Bazhenov, Douglas Blackiston, Josh Bongard, Andrew P Brna, Suraj Chakravarthi Raja, Nick Cheney, Jeff Clune, et al. Biological underpinnings for lifelong learning machines. Nature Machine Intelligence, 4(3):196-210, 2022.

**Claims**

1. A computer-implemented method for learning of a plurality of tasks in artificial neural networks, wherein the method comprises the steps of:

   - initially processing each task in a single network comprising a plurality of layers wherein:
   - the first layer comprises a task node;
   - the last layer comprises a task prediction head;
   - the remaining consecutive layers specific to a task comprise a task branch;
   and
   - initially connecting all task nodes to an input image,

   **characterized in that** the method comprises a task learning phase and a structural learning phase, wherein the structural learning phase comprises the steps of creating and removing neurons based on local task similarity.

2. The computer-implemented method of claim 1, **characterized in that** wherein the task learning phase comprises the steps of:

- training all networks to minimize a multi-task loss; and
- training all the task nodes to maximize similarity among the said task nodes by aligning their learned concepts.

3. The computer-implemented method of any one of the preceding claims, **characterized in that** the step of maximizing similarity among task nodes by aligning learned concepts of said task nodes comprises the step of locally increasing a similarity in said learned concepts by gauging a similarity between features of said task nodes, representing the local activity of a task, using a similarity metric, such as Centered Kernel Alignment.

4. The computer-implemented method of any one of the preceding claims, **characterized in that** the task learning phase comprises the steps of:

- using a weighted sum of all individual task losses for representing the multi-task loss; and
- using a regularization term included with a balancing factor and a negative sign for maximizing alignment between task nodes.

5. The computer-implemented method of any one of the preceding claims, **characterized in that** the step of training the entire network to minimize a multi-task loss comprises the step of minimizing the task branch, only on the corresponding task loss independently of other tasks.

6. The computer-implemented method of any one of the preceding claims, **characterized in that** the step of creating neurons comprises the steps of:

- calculating similarity between all pairs of task node features;
- listing all possible groups of task nodes;
- selecting a set of groups that maximizes the total similarity;
- using the groups that satisfy a minimum required similarity for creating a group node.

7. The computer-implemented method of any one of the preceding claims, **characterized in that** the step of creating neurons comprises the step of using knowledge learned in the task nodes for initializing the created group node using a two-step process:

- obtaining weights of the group node by averaging parameters of the concerned task nodes;
- distilling the knowledge learned by multiple task nodes into the group node using an attention-based feature amalgamation method.

8. The computer-implemented method of any one of the preceding claims, **characterized in that** the step of removing neurons comprises the steps of:

- labeling the task nodes used for creating the group node as redundant nodes;
- disconnecting the task branches connected to said redundant task nodes and removing said redundant task nodes;
- connecting the disconnected task branches to the corresponding group node; and
- assigning the first layer of said task branches as new task nodes;

9. The computer-implemented method of any one of the preceding claims, **characterized in that** the method comprises a fine-tuning phase wherein the network is only trained with the multi-task loss while skipping the step of aligning concepts learned by task nodes.

10. The computer-implemented method of any one of the preceding claims, **characterized in that** the method comprises the step of alternating between the task learning phase and the structural learning phase for a plurality of times before starting the final fine-tuning phase.

11. A computer-readable storage provided with a computer program wherein when said computer program is loaded and executed by a computer, said computer program causes the computer to carry out the steps of the computer-implemented method according to any one of claims 1-10.

12. An autonomous driving awareness method incorporating the computer implemented method of any one of claims 1-10.

13. An autonomous vehicle comprising a computer loaded with a computer program wherein said program is arranged for causing the computer to carry out the steps of the computer-implemented method according to any one of claims 1-10.


**Amended claims in accordance with Rule 137(2) EPC.**

1. A computer-implemented method for learning of a plurality of tasks in artificial neural networks, wherein the method comprises the steps of:

   - initially processing each task in a single network comprising a plurality of layers wherein:
   - the first layer comprises a task node;
   - the last layer comprises a task prediction head;
   - the remaining consecutive layers specific to a task comprise a task branch, wherein said task node is a layer for connecting a branch to another branch or to another node, wherein a branch is a sequence of layers that follow a node
   and
   - initially connecting all task nodes to an input image, **characterized in that** the method comprises a task learning phase and a structural learning phase, wherein the task learning phase comprises the steps of:

      - training all networks to minimize a multi-task loss; and
      - training all the task nodes to maximize similarity among said task nodes by aligning their learned concepts through locally increasing a similarity in said learned concepts by gauging a similarity between features of said task nodes, representing a local activity of a task, using a similarity metric, such as Centered Kernel Alignment, and maximizing said similarity metric,

   and wherein the structural learning phase comprises the steps of creating and removing neurons based on local task similarity in the network architecture.

2. The computer-implemented method of claim 1, **characterized in that** the task learning phase comprises the steps of:

   - using a weighted sum of all individual task losses for representing the multi-task loss; and
   - using a regularization term included with a balancing factor and a negative sign for maximizing alignment between task nodes, wherein regularization term enforces the task representations to align by serving as an alignment constraint.

3. The computer-implemented method of claim 1 or 2, **characterized in that** the method comprises the step of training the entire network to minimize a multi-task loss by minimizing a current task loss of a current task branch independently of other tasks.

4. The computer-implemented method of any one of the preceding claims, **characterized in that** the step of creating neurons comprises the steps of:

   - calculating similarity between all pairs of task node features;
   - listing all possible groups of task nodes;
   - selecting a set of groups that maximizes a total similarity, wherein the total similarity is a sum of similarity scores of each group;
   - using the set of groups that satisfy a minimum required total similarity for creating a group node by:

      - using knowledge learned in the task nodes for initializing the created group node using a two-step process:
      - obtaining weights of the group node by averaging parameters of the concerned task nodes;
      - distilling the knowledge learned by multiple task nodes into the group node using an attention-based feature amalgamation method.

5. The computer-implemented method of any one of the preceding claims, **characterized in that** the step of removing neurons comprises the steps of:

- labeling the task nodes used for creating the group node as redundant nodes;
- disconnecting the task branches connected to said redundant task nodes and removing said redundant task nodes;
- connecting the disconnected task branches to the corresponding group node; and
- assigning the first layer of said task branches as new task nodes;

6. The computer-implemented method of any one of the preceding claims, **characterized in that** the method comprises a fine-tuning phase wherein the network is only trained with the multi-task loss while skipping the step of aligning concepts learned by task nodes.

7. The computer-implemented method of any one of the preceding claims, **characterized in that** the method comprises the step of alternating between the task learning phase and the structural learning phase for a plurality of times before starting the final fine-tuning phase.

8. A computer-readable storage provided with a computer program wherein when said computer program is loaded and executed by a computer, said computer program causes the computer to carry out the steps of the computer-implemented method according to any one of claims 1-7.

9. An autonomous vehicle comprising a computer loaded with a computer program wherein said program is arranged for causing the computer to carry out the steps of the computer-implemented method according to any one of claims 1-7.

Fig. 1

Europäisches
Patentamt

European
Patent Office

Office européen
des brevets

# EUROPEAN SEARCH REPORT

Application Number

EP 22 19 1725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | SIMON VANDENHENDE ET AL: "Branched Multi-Task Networks: Deciding What Layers To Share", ARXIV.ORG, CORNELL UNIVERSITY LIBRARY, 201 OLIN LIBRARY CORNELL UNIVERSITY ITHACA, NY 14853, 5 April 2019 (2019-04-05), XP081639629, * Sections 3 and 4 * | 1-13 | INV. G06N3/082 G06N3/045 ADD. G06N3/096 |
| A | WEI-HONG LI ET AL: "Universal Representation Learning from Multiple Domains for Few-shot Classification", ARXIV.ORG, CORNELL UNIVERSITY LIBRARY, 201 OLIN LIBRARY CORNELL UNIVERSITY ITHACA, NY 14853, 25 March 2021 (2021-03-25), XP081916914, * abstract * * Section 3 * | 2-4 | |
| A | XU DAN ET AL: "PAD-Net: Multi-tasks Guided Prediction-and-Distillation Network for Simultaneous Depth Estimation and Scene Parsing", 2018 IEEE/CVF CONFERENCE ON COMPUTER VISION AND PATTERN RECOGNITION, IEEE, 18 June 2018 (2018-06-18), pages 675-684, XP033476028, DOI: 10.1109/CVPR.2018.00077 * Section 3 * | 7 | TECHNICAL FIELDS SEARCHED (IPC) G06N |
| A | WO 2021/105036 A1 (CONTINENTAL AUTOMOTIVE GMBH [DE]) 3 June 2021 (2021-06-03) * the whole document * | 1-13 | |

-/--

The present search report has been drawn up for all claims

| Place of search | Date of completion of the search | Examiner |
|---|---|---|
| The Hague | 23 May 2023 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 1 of 2

Europäisches Patentamt

European Patent Office

Office européen des brevets

**EUROPEAN SEARCH REPORT**

Application Number

EP 22 19 1725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIU YINGFANG ET AL: "Face Attribute Recognition Based on Task Similarity and Attention Module", 2022 7TH INTERNATIONAL CONFERENCE ON INTELLIGENT COMPUTING AND SIGNAL PROCESSING (ICSP), IEEE, 15 April 2022 (2022-04-15), pages 497-501, XP034128017, DOI: 10.1109/ICSP54964.2022.9778398 * Section II.B. * | 1-13 | |
| | | | **TECHNICAL FIELDS SEARCHED (IPC)** |

The present search report has been drawn up for all claims

| Place of search | Date of completion of the search | Examiner |
|---|---|---|
| The Hague | 23 May 2023 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 22 19 1725

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2023

| Patent document cited in search report | | Publication date | Patent family member(s) | Publication date |
|---|---|---|---|---|
| WO 2021105036 | A1 | 03-06-2021 | CN 114930345 A | 19-08-2022 |
| | | | DE 112020005759 T5 | 08-09-2022 |
| | | | EP 3825922 A1 | 26-05-2021 |
| | | | US 2023004782 A1 | 05-01-2023 |
| | | | WO 2021105036 A1 | 03-06-2021 |

EPO FORM P0459

For more details about this annex : see Official Journal of the European Patent Office, No. 12/82

**EP 4 318 323 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANONYMOUS.** Structural Learning in Artificial Neural Networks: A Neural Operator Perspective. *Under review in Transactions of Machine Learning Research,* 2022
- **MARIN ORSIC ; IVAN KRESO ; PETRA BEVANDIC ; SINISA SEGVIC.** In defense of pre-trained imagenet architectures for real-time semantic segmentation of road-driving images. *In Proceedings of the IEEE/CVF Conference on Computer Vision and Pattern Recognition,* 2019, 12607-12616
- **LIJUN WANG ; JIANMING ZHANG ; OLIVER WANG ; ZHE LIN ; HUCHUAN LU.** Sdc-depth: Semantic divide-and-conquer network for monocular depth estimation. *Proceedings of the IEEE/CVF Conference on Computer Vision and Pattern Recognition,* 2020, 541-550
- **CHANGQIAN YU ; CHANGXIN GAO ; JINGBO WANG ; GANG YU ; CHUNHUA SHEN ; NONG SANG.** Bisenet v2: Bilateral network with guided aggregation for real-time semantic segmentation. *International Journal of Computer Vision,* 2021, vol. 129 (11), 3051-3068
- Reparameterizing convolutions for incremental multi-task learning without task interference. **MENELAOS KANAKIS ; DAVID BRUGGEMANN ; SUMAN SAHA ; STAMATIOS GEORGOULIS ; ANTON OBUKHOV ; LUC VAN GOOL.** Computer Vision - ECCV. Springer International Publishing, 2020, 689-707
- **SHIKUN LIU ; EDWARD JOHNS ; ANDREW J. DAVISON.** *End-to-end multi-task learning with attention. 2019 IEEE/CVF Conference on Computer Vision and Pattern Recognition (CVPR),* 2019, 1871-1880
- **TREVOR SCOTT STANDLEY ; AMIR ROSHAN ZAMIR ; DAWN CHEN ; LEONIDAS J. GUIBAS ; JITENDRA MALIK ; SILVIO SAVARESE.** Which tasks should be learned together in multi-task learning?. *ICML,* 2020
- Efficiently identifying task groupings for multi-task learning. **CHRISTOPHER FIFTY ; EHSAN AMID ; ZHE ZHAO ; TIANHE YU ; ROHAN ANIL ; CHELSEA FINN.** Advances in Neural Information Processing Systems. 2021
- **S. VANDENHENDE ; S. GEORGOULIS ; B. DE BRABANDERE ; L. VAN GOOL.** Branched Multi-Task Networks: Deciding What Layers To Share. *BMVC,* 2020

- **ALEX KENDALL ; YARIN GAL ; ROBERTO CIPOLLA.** Multi-task learning using uncertainty to weigh losses for scene geometry and semantics. *2018 IEEE/CVF Conference on Computer Vision and Pattern Recognition,* 2018, 7482-7491
- Pareto multi-task learning. **XI LIN ; HUI-LING ZHEN ; ZHENHUA LI ; QING-FU ZHANG ; SAM KWONG.** Advances in Neural Information Processing Systems. Curran Associates, Inc, 2019, vol. 32
- **SHIKUN LIU ; EDWARD JOHNS ; ANDREW J. DAVISON.** End-to-end multi-task learning with attention. *2019 IEEE/CVF Conference on Computer Vision and Pattern Recognition (CVPR),* 2019, 1871-1880
- Gradient surgery for multi-task learning. **TIANHE YU ; SAURABH KUMAR ; ABHISHEK GUPTA ; SERGEY LEVINE ; KAROL HAUSMAN ; CHELSEA FINN.** Advances in Neural Information Processing Systems. Curran Associates, Inc, 2020, vol. 33, 5824-5836
- **PENGSHENG GUO ; CHEN-YU LEE ; DANIEL ULBRICHT.** Learning to branch for multi-task learning. *Proceedings of the 37th International Conference on Machine Learning,* 13 July 2020, vol. 119, 3854-3863
- **YONGXI LU ; ABHISHEK KUMAR ; SHUANGFEI ZHAI ; YU CHENG ; TARA JAVIDI ; ROGERIO FERIS.** Fully-adaptive feature sharing in multi-task networks with applications in person attribute classification. *2017 IEEE Conference on Computer Vision and Pattern Recognition (CVPR),* 2017, 1131-1140
- **HONGYI WANG ; MIKHAIL YUROCHKIN ; YUEKAI SUN ; DIMITRIS PAPAILIOPOULOS ; YASAMAN KHAZAENI.** Federated learning with matched averaging. *International Conference on Learning Representations,* 2020
- **XIAOXI HE ; ZIMU ZHOU ; LOTHAR THIELE.** Multi-task zipping via layer-wise neuron sharing. *NeurIPS,* 2018
- **MIKHAIL IU. LEONTEV ; VIKTORIIA ISLENTEVA ; SERGEY V. SUKHOV.** Non-iterative knowledge fusion in deep convolutional neural networks. *Neural Processing Letters,* 2019, vol. 51, 1-22
- Model fusion via optimal transport. **SIDAK PAL SINGH ; MARTIN JAGGI.** Advances in Neural Information Processing Systems. Curran Associates, Inc, 2020, vol. 33, 22045-22055

- Similarity of neural network representations revisited. **SIMON KORNBLITH ; MOHAMMAD NOROUZI ; HONGLAK LEE ; GEOFFREY HINTON.** Proceedings of the 36th International Conference on Machine Learning. 15 June 2019, vol. 97, 3519-3529
- **WEI-HONG LI ; HAKAN BILEN.** Knowledge distillation for multi-task learning. *Proceedings of the European Conference on Computer Vision Workshop on Imbalance Problems in Computer Vision,* 2020
- **SIHUI LUO ; WENWEN PAN ; XINCHAO WANG ; DAZHOU WANG ; HAIHONG TANG ; MINGLI SONG.** Collaboration by competition: Self-coordinated knowledge amalgamation for multi-talent student learning. *ECCV,* 2020
- **SIHUI LUO ; XINCHAO WANG ; GONGFAN FANG ; YAO HU ; DAPENG TAO ; MINGLI SONG.** Knowledge amalgamation from heterogeneous networks by common feature learning. *Proceedings of the 28th International Joint Conference on Artificial Intelligence (IJCAI),* 2019
- Amalgamating knowledge towards comprehensive classification. **CHENGCHAO SHEN ; XINCHAO WANG ; JIE SONG ; LI SUN ; MINGLI SONG.** Proceedings of the Thirty-Third AAAI Conference on Artificial Intelligence and Thirty-First Innovative Applications of Artificial Intelligence Conference and Ninth AAAI Symposium on Educational Advances in Artificial Intelligence, AAAI'19/IAAI'19/EAAI'19. AAAI Press, 2019
- **JINGWEN YE ; YIXIN JI ; XINCHAO WANG ; KAIRI OU ; DAPENG TAO ; MINGLI SONG.** Student becoming the master: Knowledge amalgamation for joint scene parsing, depth estimation, and more. *2019 IEEE/CVF Conference on Computer Vision and Pattern Recognition (CVPR),* 2019, 2824-2833
- **NARESH KUMAR GURULINGAN ; ELAHE ARANI ; BAHRAM ZONOOZ.** UniNet: A unified scene understanding network and exploring multi-task relationships through the lens of adversarial attacks. *Proceedings of the IEEE/CVF International Conference on Computer Vision (ICCV) Workshops,* October 2021, 2239-2248
- **THAO NGUYEN ; MAITHRA RAGHU ; SIMON KORNBLITH.** Do wide and deep networks learn the same things? uncovering how neural network representations vary with width and depth. *International Conference on Learning Representations,* 2021
- **HEIKO J LUHMANN ; ANNE SINNING ; JENQ-WEI YANG ; VICENTE REYES-PUERTA ; MAIK C STÜTTGEN ; SERGEI KIRISCHUK ; WERNER KILB.** Spontaneous neuronal activity in developing neocortical networks: from single cells to large-scale interactions. *Frontiers in neural circuits,* 2016, vol. 10, 40
- **DHIREESHA KUDITHIPUDI ; MARIO AGUILAR-SIMON ; JONATHAN BABB ; MAXIM BAZHENOV ; DOUGLAS BLACKISTON ; JOSH BONGARD ; ANDREW P BRNA ; SURAJ CHAKRAVARTHI RAJA ; NICK CHENEY ; JEFF CLUNE et al.** Biological underpinnings for lifelong learning machines. *Nature Machine Intelligence,* 2022, vol. 4 (3), 196-210